# FASCICULE DE BREVET EUROPEEN

(11) **EP 0 864 780 B1**
(45) Date de publication et mention de la délivrance du brevet: **12.09.2001**
(21) Numéro de dépôt: 98400451.5
(22) Date de dépôt: 25.02.1998
(51) Int. Cl.: F16H 59/04, B60K 20/08, F16H 61/36

(54) **Dispositif de commande d'une boîte de vitesses de véhicule automobile**
Vorrichtung zum Schalten eines Gangwechselgetriebes eines Kraftfahrzeuges
Automotive vehicle gearbox control device

(30) Priorité: 13.03.1997 FR 9703020
(43) Date de publication de la demande: 16.09.1998
(73) Titulaire: AUTOMOBILES PEUGEOT, 75116 Paris (FR); AUTOMOBILES CITROEN, 92200 Neuilly-sur-Seine (FR)
(72) Inventeur: Richard, Olivier, 94600 Choisy Le Roi (FR)
(74) Mandataire: Thinat, Michel

(56) Documents cités:
- EP-A- 0 565 400
- EP-A- 0 575 861

## Description

La présente invention concerne un dispositif de command d'une boîte de vitesses de véhicule automobile dont un exemple est décrit dans le document EP-A-575861, qui divulge toutes les caractéristiques du préambule de la revendication 1.

Les dispositifs de commande de boîte de vitesses connus jusqu'à maintenant sont d'une structure telle qu'il est difficile d'obtenir un volume de rangement sous la partie centrale de la planche de bord, où un tel dispositif occupe un volume relativement important.

La présente invention a pour but d'éliminer les inconvénients ci-dessus des dispositifs connus.

A cet effet, l'invention propose un dispositif de commande d'une boîte de vitesses de véhicule automobile, comprenant un levier de manoeuvre pouvant pivoter sur deux axes sécants orthogonaux de manière à actionne respectivement deux organes de transmission, tel que deux câbles, dans une direction sensiblement perpendiculaire aux deux axes, à partir de deux extrémités respectivement de deux bras, chacune de ces extrémités étant, en position moyenne, proche de l'un des deux axes et écartée de l'autre axe de manière que le pivotement du levier de manoeuvre autour de l'un quelconque des deux axes déplace dans ladite direction l'extrémité du bras qui en est écartée et l'organe de transmission associé, sans induire de déplacement de l'extrémité de l'autre bras et de l'autre organe de transmission associé, et qui est caractérisé en ce que l'un au moins des deux organes de transmission est relié à l'extrémité de l'un des bras, à partir de laquelle il est actionné, par un levier de renvoi pivotant sur un axe approximativement contenu dans le même plan que les deux axes sécants de manière que cet organe de transmission soit disposé à une distance voulue éloignée du levier de manoeuvre et à proximité de l'autre organe de transmission.

De préférence, le levier de renvoi est lié à l'extrémité de bras associée par un moyen d'articulation présentant une liberté de déplacement parallèlement à chacun des deux axes sécants.

Le bras lié par son extrémité au levier de renvoi pivote, solidairement avec le levier de manoeuvre, sur l'un des deux axes pivotant lui-même, solidairement avec l'autre bras, sur l'autre axe porté par un support, l'autre bras comporte une extension dirigée vers l'avant du véhicule et à l'extrémité de laquelle est liée l'extrémité de l'organe de transmission correspondant et le levier de renvoi lié d'une part à l'extrémité du bras est d'autre part lié à l'extrémité de l'autre organe de transmission par une extension dirigée vers l'avant du véhicule, les deux extrémités de liaison aux extensions des organes de transmission étant proches l'une de l'autre et situées, en position moyenne, approximativement dans le plan contenant les deux axes sécants.

Avantageusement, le moyen d'articulation comprend une rotule solidaire du bras correspondant, sur laquelle est monté un élément formant patin lié au levier de renvoi par une chape solidaire de ce levier dans laquelle l'élément formant patin peut se déplacer parallèlement à l'axe de pivotement de ce levier et radialement par rapport à cet axe.

De préférence, le bras de support de la rotule est, en position moyenne, coaxial à l'axe de pivotement de l'autre bras pivotant.

Les câbles constituant les organes de transmission sont reliés chacun à l'extension correspondante du levier de renvoi et de l'autre bras par l'intermédiaire d'un embout.

Le dispositif de l'invention est intégré à la planche de bord du véhicule et le levier de manoeuvre se trouve à proximité du plan médian longitudinal de celui-ci.

L'invention sera mieux comprise et d'autres buts caractéristiques, détails et avantages de celle-ci apparaîtront plus clairement dans la description explicative qui va suivre faite en référence aux dessins simplifiés annexés donnés uniquement à titre d'exemple illustrant un mode de réalisation de l'invention et dans lesquels :

La figure 1 est une vue de face en perspective du dispositif de commande, conforme à l'invention, d'une boîte de vitesses de véhicule automobile et implanté dans la planche de bord de celui-ci.

La figure 2 est une vue de côté suivant la flèche II du dispositif de la figure 1.

La figure 3 est une vue de dessus suivant la flèche III du dispositif de la figure 2.

La figure 4 est une vue en perspective du dispositif de commande de l'invention.

La figure 5 est une vue en coupe, à plus grande échelle, suivant la ligne V-V du dispositif de la figure 2.

La figure 6 est une vue partielle en perspective suivant la flèche VI de la figure 5.

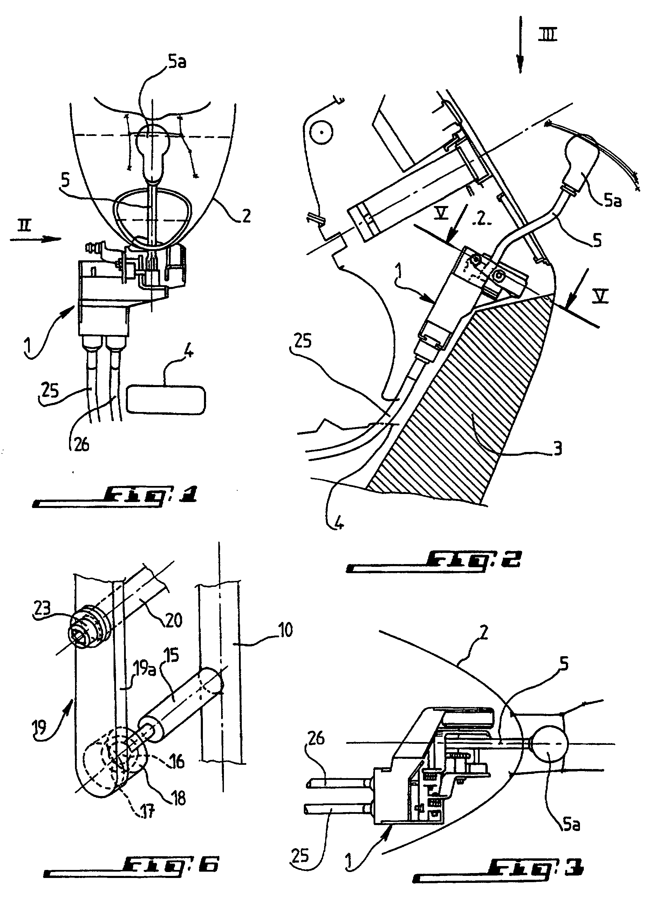

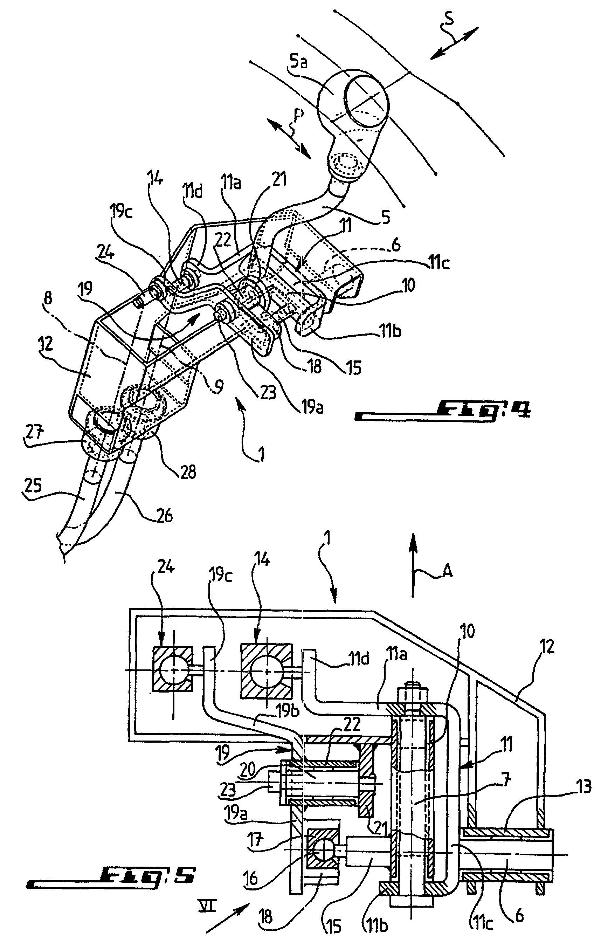

En se reportant plus particulièrement aux figures 1 à 3, la référence 1 désigne le dispositif de l'invention permettant de commander une boîte de vitesses d'un véhicule automobile.

Ce dispositif est intégré dans la planche de bord 2 du véhicule et agencé de manière à obtenir un volume de rangement 3 relativement important sous celui-ci avec un volume minimisé de la planche de bord 2 tout en permettant à la conduite de sortie 4 de l'appareil de climatisation (non représenté) du véhicule de déboucher au voisinage de l'axe longitudinal de ce véhicule.

Comme cela ressort mieux des figures 4 et 5, le dispositif de commande de l'invention comprend un levier de manoeuvre 5 de changement de vitesse du véhicule, disposé approximativement dans le plan médian longitudinal du véhicule et pouvant pivoter sur deux axes sécants orthogonaux 6, 7, l'axe de pivotement 7 étant parallèle à l'axe longitudinal du véhicule, de manière à actionner respectivement deux organes de transmission du changement de vitesse constitués dans le cas présent par deux câbles 8, 9 dont les parties d'extrémités s'étendent dans une direction sensiblement perpendiculaire au plan contenant les deux axes sécants 6, 7.

Le levier de manoeuvre 5 est monté, à son extrémité opposée au pommeau 5a de celui-ci, sur l'axe 7 par l'intermédiaire d'un manchon 10, auquel cette extrémité est solidarisée, monté à rotation sur l'axe 7 qui est fixé entre deux branches 11a, 11b d'une pièce 11 conformée en U, l'une 11a de ces branches constituant un bras pivotant d'actionnement de l'un 9 des câbles de transmission. Comme représenté en figure 5, l'axe 7 est constitué par un boulon fixé aux deux branches 11a, 11b de pièce 11 transversalement à celles-ci. La pièce 11 est montée pivotante relativement au boîtier de support 12 du dispositif par l'intermédiaire de l'axe 6 solidaire de la branche 11c de liaison des branches du U 11a, 11b perpendiculairement à celle-ci et monté à rotation dans un palier 13 du boîtier 12.

La branche (ou bras) 11a se prolonge transversalement au véhicule et se termine par une partie d'extension coudée à angle droit 11d s'étendant vers l'avant A du véhicule Un embout 14 du câble 9 est fixé à l'extrémité de la partie d'extension 11d du bras 11a.

Un second bras 15 permettant d'actionner le câble 8 dans la direction sensiblement perpendiculaire au plan contenant les axes 6, 7 est fixé, par exemple par soudage, à une extrémité du manchon 10 perpendiculairement à celui-ci et de façon opposée à l'axe 6 coaxialement à ce dernier. Le bras 15, qui se trouve du côté de la branche 11b de la pièce 11, comporte à son extrémité une rotule 16 formant moyen d'articulation sur laquelle est emboîté un élément formant patin 17 engagé dans une chape 18 solidaire d'une extrémité d'une partie droite 19a d'un levier de renvoi 19 sensiblement parallèle à l'axe 7.

Le levier de renvoi 19 est monté pivotant par sa partie droite 19a sur un axe 20 fixé à l'une de ses extrémités à une patte de support 21 fixée, par exemple par soudage, au corps du boîtier 12 parallèlement à l'axe 7. La partie droite 19a du levier de renvoi 19 est montée, à l'opposé de l'extrémité de l'axe 20 solidaire de la patte 21, par exemple par soudage, sur une extrémité d'un manchon 22 monté à rotation autour de l'axe 20 et maintenu axialement par une tête de vis 23 fixée à l'axe 20 qui est contenu approximativement dans le même plan que les deux axes 6, 7. Le levier de renvoi 19 comprend une partie oblique 19b prolongée par une partie d'extension 19c s'étendant vers l'avant du véhicule parallèlement à la partie d'extension 11d du bras 11a et proche de cette dernière. L'embout 24 de l'autre câble de transmission 8 est fixé à l'extrémité de la partie d'extension 19c du levier de renvoi 19.

Le levier de renvoi 19 est ainsi lié à l'extrémité du bras 15 par la rotule 16 de manière à présenter une liberté de déplacement radialement et axialement par rapport à l'axe de pivotement 20 de ce levier.

Les deux câbles de tranmission 8, 9, représentés symboliquement en traits mixtes en figure 4, font saillie respectivement de deux gaines 25, 26 dont les extrémités sont maintenues en butée contre une partie de paroi correspondante du boîtier 12, de façon connue en soi, par deux manchons 27, 28 fixés au boîtier 12. Les deux embouts 14, 24 des câbles de transmission 8, 9, qui sont proches l'un de l'autre, sont situés, en position moyenne représentée notamment en figure 4, approximativement au niveau du plan contenant les deux axes sécants 6, 7.

Le fonctionnement du dispositif de commande de l'invention ressort déjà de la description qui en a été faite ci-dessus et va être maintenant expliqué.

Lorsqu'on déplace le levier de manoeuvre 5 suivant un mouvement S de sélection de vitesse représenté notamment en figure 4, le mouvement du levier fait pivote simultanément autour de l'axe 7 7 le manchon 10 et le bras 15, ce qui provoque un déplacement approximativement vertical de la rotule 16 et ainsi le pivotement du levier de renvoi 19 autour de l'axe 20 de sorte que l'extension 19c de ce levier, plus éloignée de l'axe 7 que l'extension 11d du bras 11a, actionne le câble de transmission 8 dans la direction sensiblement perpendiculaire aux deux axes sécants 6, 7. Bien entendu, le pivotement du levier de manoeuvre 5 autour de l'axe 7 ne provoque pas de déplacement du bras 11a de sorte que l'embout 14 du câble 9 reste à sa position moyenne.

Lorsqu'on manoeuvre le levier 5 suivant la direction P indiquée en figure 4 et située dans un plan vertical parallèle au plan médian longitudinal du véhicule, pour effectuer un mouvement de passage d'une vitesse à l'autre du véhicule, la pièce 11 pivote par son axe de pivotement 6 de manière que l'extension 11d, plus éloignée de l'axe 6 que de l'axe 7, actionne le câble de transmission 9 dans la direction sensiblement perpendiculaire aux deux axes sécants 6, 7 sans induire de déplacement de l'extension 19c du levier de renvoi 19 puisque le bras 15, coaxial à l'axe 6, fait tourner autour de son axe de révolution la rotule 16 sans provoquer de pivotement du levier de renvoi 19 autour de l'axe 20.

Le dispositif de commande de l'invention est ainsi agencé de manière à pouvoir être implanté aussi bien à droite qu'à gauche du plan médian du véhicule dans lequel se trouve le levier de manoeuvre avec décalage des câbles de transmission transversalement au véhicule, comme représenté par exemple en figure 1, sans changer la cinématique de fonctionnement de ce dispositif. Le dispositif permet également de décaler les câbles vers l'avant du véhicule de façon à obtenir un espace disponible sous le levier de manoeuvre pour y disposer par exemple un boîtier de rangement comme représenté en figure 2. De plus, le dispositif de commande est agencé de manière qu'il n'y ait aucune interaction entre les mouvements de sélection et de passage de vitesse par le levier de manoeuvre. Il est également possible de modifier la présentation de l'ensemble du dispositif sans changer le point du pommeau du levier 1 (voir figure 4) en modifiant ce levier.

Tous les avantages ci-dessus mentionnés du dispositif de commande de l'invention sont obtenus sans augmenter son coût de fabrication.

## Revendications

1. Dispositif de commande d'une boîte de vitesses de véhicule automobile, comprenant un levier de manoeuvre (5) pouvant pivoter sur deux axes sécants orthogonaux (6 ; 7) de manière à actionner respectivement deux organe de transmission (8, 9), tels que deux câbles, dans une direction sensiblement perpendiculaire aux deux axes (6, 7), à partir de deux extrémités respectivement de deux bras (11a, 15), chacune de ces extrémités étant, en position moyenne, proche de l'un des deux axes (6, 7) et écartée de l'autre axe de manière que le pivotement du levier de manoeuvre (5) autour de l'un quelconque des deux axes (6, 7) déplace dans ladite direction l'extrémité du bras (11a ; 15) qui en est écartée et l'organe de transmission (8 ; 9) associé, sans induire de déplacement de l'extrémité de l'autre bras (15 ; 11a) et de l'autre organe de transmission associé (9 ; 8), **caractérisé en ce que** l'un (8) au moins des deux organes de transmission (8 ; 9) est relié à l'extrémité de l'un (15) des bras (11a ; 15), à partir de laquelle il est actionné, par un levier de renvoi (19) pivotant sur un axe (20) approximativement contenu dans le même plan que les deux axes sécants (6, 7) de manière que cet organe de transmission (8) soit disposé à une distance voulue éloignée du levier de manoeuvre et à proximité de l'autre organe de transmission (9).

2. Dispositif selon la revendication 1, **caractérisé en ce que** le levier de renvoi (19) est lié à l'extrémité associée du bras (15) par un moyen d'articulation (16) présentant une liberté de déplacement parallèlement à l'axe (20) de pivotement du levier et radialement par rapport à cet axe.

3. Dispositif selon la revendication 1 ou 2, **caractérisé en ce que** le bras (15) lié par son extrémité au levier de renvoi (19) pivote, solidairement avec le levier de manoeuvre (5), sur l'un des deux axes (6, 7) pivotant lui-même, solidairement avec l'autre bras (11a), sur l'autre axe (6) porté par un support (12), l'autre bras (11a) comporte une extension (11d) dirigée vers l'avant du véhicule et à l'extrémité de laquelle est liée l'extrémité de l'organe de tranmission correspondant (9), et le levier de renvoi (19) lié d'une part à l'extrémité du bras (15) est d'autre part lié à l'extrémité de l'autre organe de transmission (8) par une extension (19c) dirigée vers l'avant du véhicule, les deux extrémités de liaison aux extensions (11d, 19c) des organes de transmission (9, 8) étant proches l'une de l'autre et situées, en position moyennes, approximativement dans le plan contenant les deux axes sécants (6, 7).

4. Dispositif selon la revendication 2 ou 3, **caractérisé en ce que** le moyen d'articulation précité comprend une rotule (16) solidaire du bras correspondant (15), sur laquelle est monté un élément formant patin (17) lié au levier de renvoi (19) par une chape (18) solidaire de ce levier dans laquelle l'élément formant patin (17) peut se déplacer radialement et axialement par rapport à l'axe (20) de pivotement du levier (19).

5. Dispositif selon la revendication 4, **caractérisé en ce que** le bras (15) de support de la rotule (16) est, en position moyenne, coaxial à l'axe de pivotement (6) de l'autre bras pivotant (11).

6. Dispositif selon l'une des revendications 3 à 5, **caractérisé en ce que** les organes de transmission précités sont des câbles (8, 9) reliés chacun à l'extension correspondante (19c, lld) du levier de renvoi (19) et de l'autre bras (11a) par l'intermédiaire d'un embout (14, 24).

7. Dispositif selon l'une des revendications précédentes, **caractérisé en ce qu'**il est intégré à la planche de bord (2) du véhicule et le levier de manoeuvre (5) se trouve à proximité du plan médian longitudinal du véhicule.

## Patentansprüche

1. Vorrichtung zum Schalten eines Gangwechselgetriebes eines Kraftfahrzeuges, umfassend einen Steuerhebel (5), der um zwei orthogonal schneidende Achsen (6; 7) derart schwenken kann, daß jeweils zwei Übertragungsorgane (8, 9), wie zum Beispiel zwei Kabel, in einer deutlich senkrechten Richtung zu den zwei Achsen (6, 7) von zwei äußeren Enden von jeweils zwei Armen (11a, 15) betätigt werden, wobei jedes dieser äußeren Enden in mittlerer Position nahe einer der zwei Achsen (6, 7) und entfernt von der anderen Achse derart ist, daß das Schwenken des Steuerhebels (5) um eine der zwei Achsen (6, 7) das äußere Ende des Arms (11a; 15) in besagter Richtung, das davon entfernt ist, und das zugeordnete Übertragungsorgan (8; 9) verschiebt, ohne eine Verschiebung des äußeren Ende des anderen Arms (15; 11a), und des anderen zugeordneten Übertragungsorgans (9; 8) zu induzieren, **dadurch gekennzeichnet, daß** wenigstens eines (8) der zwei Übertragungsorgane (8; 9) mit dem äußeren Ende des einen (15) der Arme (11a; 15) verbunden ist, von dem aus er durch einen Umlenkhebel (19) betätigt wird, der um eine Achse (20) schwenkt, die ungefähr in derselben Ebene enthalten ist wie die zwei schneidenden Achsen (6, 7), derart, daß dieses Übertragungsorgan (8) in einer bestimmten entfernten Distanz vom Steuerhebel und in der Nähe des anderen Übertragungsorgans (9) angeordnet ist.

2. Vorrichtung gemäß Anspruch 1, **dadurch gekennzeichnet, daß** der Umlenkhebel (19) mit dem dem Arm (15) zugeordneten äußeren Ende durch ein Artikulationsmittel (16) verbunden ist, das eine Verschiebungsfreiheit parallel zur Schwenkachse (20) des Hebels und radial im Verhältnis zu dieser Achse aufweist.

3. Vorrichtung gemäß Anspruch 1 oder 2, **dadurch gekennzeichnet, daß** der Arm (15), der durch sein äußeres Ende mit dem Umlenkhebel (19) verbunden ist, fest verbunden mit dem Steuerhebel (5) um eine der zwei Achsen (6, 7) schwenkt, die selber fest verbunden mit dem anderen Arm (11a) um die andere Achse (6) schwenkt, die von einem Träger (12) getragen wird, der andere Arm (11a) umfaßt eine Erweiterung (11d), die zum Vorderteil des Fahrzeugs gerichtet ist und an deren äußeren Ende das äußere Ende des entsprechenden Übertragungsorgans (9) befestigt ist, und der Umlenkhebel (19), der einerseits mit dem äußeren Ende des Arms (15) verbunden ist, ist andererseits mit dem äußeren Ende des anderen Übertragungsorgans (8) durch eine Erweiterung (19c) verbunden, die zum Vorderteil des Fahrzeugs gerichtet ist, wobei die zwei äußeren Verbindungsenden zu den Erweiterungen (11d, 19c) der Übertragungsorgane (9, 8) einander nahe sind und in mittlerer Position ungefähr in der Ebene angeordnet sind, die die zwei schneidenden Achsen (6, 7) enthält.

4. Vorrichtung gemäß Anspruch 2 oder 3, **dadurch gekennzeichnet, daß** das vorgenannte Artikulationsmittel ein Kugelgelenk (16) umfaßt, das fest mit dem entsprechenden Arm (15) verbunden ist und auf dem ein eine Kufe (17) bildendes Element aufgebaut ist, das mit dem Umlenkhebel (19) durch eine Abdeckung (18) verbunden ist, das mit diesem Hebel fest verbunden ist und in der das eine Kufe (17) bildende Element sich radial und axial im Verhältnis zur Schwenkachse (20) des Hebels (19) verschieben kann.

5. Vorrichtung gemäß Anspruch 4, **dadurch gekennzeichnet, daß** der Stützarm (15) des Kugelgelenks (16) in mittlerer Position koaxial zur Schwenkachse (6) des anderen schwenkenden Arms (11) ist.

6. Vorrichtung gemäß Anspruch 3 bis 5, **dadurch gekennzeichnet, daß** die vorgenannten Übertragungsorgane Kabel (8, 9) sind, die jedes mit der entsprechenden Erweiterung (19c, 11d) des Umlenkhebels (19) und des anderen Arms (11a) mittels eines Ansatzstücks (14, 24) verbunden sind.

7. Vorrichtung gemäß einem der vorgenannten Ansprüche, **dadurch gekennzeichnet, daß** sie in das Instrumentenbrett (2) des Fahrzeugs integriert ist und der Steuerhebel (5) sich in der Nähe der medianen Längsebene des Fahrzeugs befindet.

## Claims

1. Automotive vehicle gearbox control device comprising a control lever (5) able to pivot on two orthogonal intersecting pins (6; 7) in order to respectively operate two transmission members (8, 9), such as two cables, in a direction substantially perpendicular to the two pins (6, 7), from two ends respectively of two arms (11a, 15), each one of these ends being, in the middle position, near one of the two pins (6, 7) and separated from the other pin in order that pivoting the control lever (5) about anyone of the two pins (6, 7) moves, in said direction, the end of the arm (11a; 15) which is separated therefrom and the operatively associated transmission member (8, 9), without causing a movement of the end of the other arm (15; 11a) and of the other operatively associated transmission member (9; 8), **characterized in that** one (8) at least of the two transmission members (8; 9) is connected to the end of one (15) of the arms (11a; 15), from which it is operated by a return lever (19) which pivots on a pin (20) which is approximatively contained in the same plane as the two intersecting pins (6; 7) so that this transmission member (8) is arranged at a desired distance separated from the control lever and near the other transmission member (9).

2. Device according to claim 1, **characterized in that** the return lever (19) is connected to the operatively associated end of the arm (15) through an articulation means (16) having a free motion parallel to the pivot pin (20) of the lever and radial with respect to this pin.

3. Device according to claim 1 or 2, **characterized in that** the arm (15) connected at its end to the return lever (19) is caused to pivot, integrally with the control lever (5), on one of the two pins (6, 7) which itself pivots integrally with the other arm (11a) on the other pin (6) carried by a support (12), the other arm (11a) comprises an extension (11d) directed frontwardly of the vehicle and to the end of which is connected the end of the corresponding transmission member (9), and the return lever (19) connected, on the one hand, to end of the arm (15) is, on the other hand, connected to end of the other transmission member (8) through an extension (19c) directed frontwardly of the vehicle, the two ends for connection to the extensions (11d, 19c) of the transmission members (9, 8) being near one from the other and arranged, in a middle position, approximatively in the plane which contains the two intersecting pins (6, 7).

4. Device according to claim 2 or 3, **characterized in that** the prementioned articulation means comprises a ball and socket joint (16) integral with the corresponding arm (15), on which is mounted a block forming element (17) connected with the return lever (19) by means of a cover (18) integral with this lever in which the block forming element (17) may move radially and axially with respect to the pivot pin (20) of the lever (19).

5. Device according to claim 4, **characterized in that** the arm (18) for supporting the ball and socket joint (16) is, in a middle position, coaxial with the pivot pin (6) of the other pivoting arm (11).

6. Device according to one of claims 3 to 5, **characterized in that** the prementioned transmission members are formed by cables (8, 9) each one being connected to the corresponding extension (19c, 11d) of the return lever (19) and of the other arm (11a) by means of a joining piece (14, 24).

7. Device according to one of the preceding claims, **characterized in that** it is integrated with the dashboard (2) of the vehicle, and the control lever (5) is arranged near the longitudinal median plane of the vehicle.
